# EUROPÄISCHE PATENTSCHRIFT

(11) **EP 1 555 289 B1**
(45) Veröffentlichungstag und Bekanntmachung des Hinweises auf die Patenterteilung: **15.06.2011**
(21) Anmeldenummer: 05000786.3
(22) Anmeldetag: 17.01.2005
(51) Int. Cl.: C08K 5/29, C04B 26/00, E21D 20/02, C08G 18/00

(54) **Verwendung von ethylenisch ungesättigten Isocyanatderivaten zur kovalenten Bindung von aktive Wasserstoffatome aufweisenden Verunreinigungen in härtbaren Massen**
Use of ethylenic unsaturated isocyanate derivates for covalent binding of active hydrogene atoms in curable components
Utilisation d' isocyanates insaturés éthyléniques pour liason covalente d' impuretés avec atomes d' hydrogène actifs dans compositions curables

(30) Priorität: 15.01.2004 DE 102004002192
(43) Veröffentlichungstag der Anmeldung: 20.07.2005
(73) Patentinhaber: HILTI Aktiengesellschaft, 9494 Schaan (LI)
(72) Erfinder: Dierker, Sascha, 86504 Merching (DE)
(74) Vertreter: Wildi, Roland

(56) Entgegenhaltungen:
- EP-A- 0 303 069
- EP-A- 0 432 087
- EP-A- 0 526 123
- EP-A- 0 849 258
- DE-A1- 3 617 702
- PATENT ABSTRACTS OF JAPAN Bd. 017, Nr. 442 (C-1097), 16. August 1993 (1993-08-16) & JP 05 098031 A (TAKEMOTO OIL & FAT CO LTD), 20. April 1993 (1993-04-20)

## Beschreibung

Gegenstand der vorliegenden Erfindung ist die Verwendung von bestimmten ethylenisch ungesättigten Isocyanaten als Mittel zur kovalenten Bindung von aktive Wasserstoffatome aufweisenden Verunreinigungen in härtbaren Massen auf der Grundlage von ethylenisch ungesättigten Monomeren, Oligomeren und Polymeren als Harzkomponente und organischen Peroxiden als Härter.

Härtbare Massen auf der Grundlage von ethylenisch ungesättigten Monomeren, Oligomeren und Polymeren, insbesondere Vinylestern und (Meth)acrylsäureestern, werden in starkem Maße als Dübelmassen und Befestigungsmörteln für beispielsweise Ankerstangen und dergleichen auf dem Bausektor eingesetzt. Dabei liegen die Harzkomponente und die Härterkomponente in getrennten Behältern vor und kommen nach dem Vermischen der beiden Bestandteile unter Aushärtung der härtbaren Masse zur Reaktion. Sowohl die Harzkomponente als auch die Härterkomponente enthalten häufig aktive Wasserstoffatome aufweisende Verbindungen, beispielsweise Wasser in Form von Feuchtigkeit, oder aber auch Phlegmatisierungsmittel für das organische Peroxid, beispielsweise Phthalate, Glycerol oder ähnliche ein- oder mehrwertige Alkohole. Diese aktive Wasserstoffatome aufweisenden Verbindungen sind insofern nachteilig, als sie in dem ausgehärteten Netzwerk als Weichmacher fungieren und dadurch dessen Festigkeitseigenschaften beeinträchtigen können.

Die Aufgabe der vorliegenden Erfindung besteht nun darin, die schädliche Wirkung solcher in den härtbaren Massen der in Rede stehenden Art unvermeidbaren, aktive Wasserstoffatome aufweisenden Verbindungen auf die physikalischen Festigkeitseigenschaften der ausgehärteten Harzmasse zu verhindern.

Es hat sich nunmehr überraschenderweise gezeigt, daß diese Aufgabe dadurch gelöst werden kann, daß man in die Harzkomponente und/oder die Härterkomponente bestimmte ethylenisch ungesättigte Isöcyanatverbindungen einarbeitet, welche mit diesen aktive Wasserstoffatome aufweisenden Verbindungen reagieren und sie durch kovalente Bindung in das ausgehärtete Netzwerk einbinden. Hierdurch wird diesen Verbindungen, beispielsweise den Phthalaten, Phlegmatisierungsmitteln, Glycerol und Alkoholen, die Möglichkeit genommen, in dem ausgehärteten Netzwerk als Weichmacher zu wirken und dadurch die angestrebten mechanischen Festigkeitswerte zu beeinträchtigen.

Gegenstand der Erfindung ist daher die Verwendung gemäß Anspruch 1. Die Unteransprüche betreffen bevorzugte Ausführungsformen dieses Erfindungsgegenstandes.

Die Erfindung betrifft somit die Verwendung von ethylenisch ungesättigten Isocyanatderivaten der allgemeinen Formel (I): 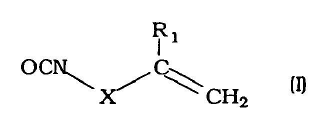 in der
X eine Gruppe der folgenden Formeln X₁ bis X₄: 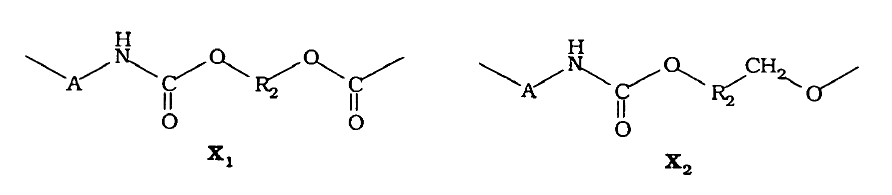 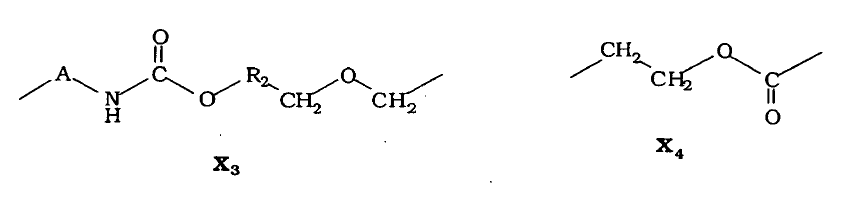 A eine geradkettige oder verzweigte Alkylengruppe mit 4 bis 6 Kohlenstoffatomen oder eine Gruppe der folgenden Formel A₁ bis A₆: 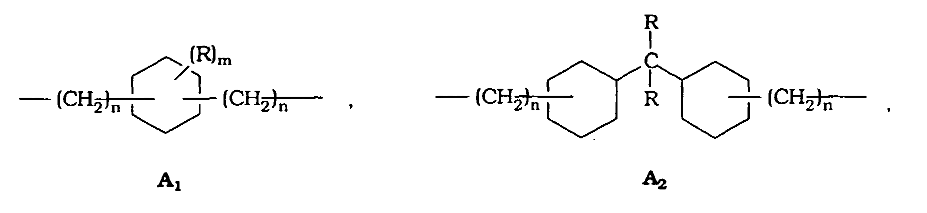 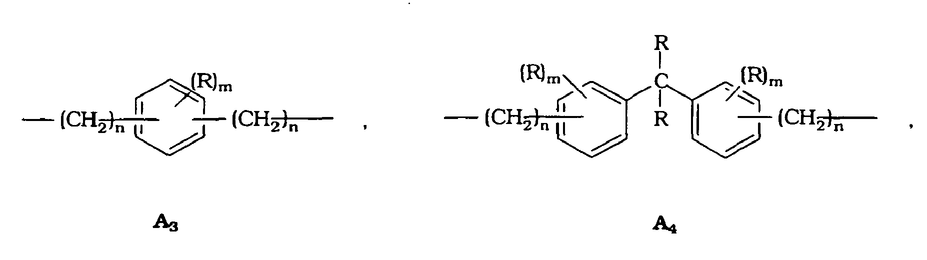 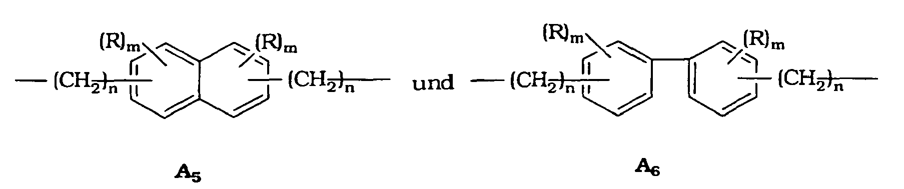 (in denen R unabhängig voneinander Wasserstoffatome oder Methylgruppen, m ganze Zahlen mit Werten von 0 oder 1 und n ganze Zahlen mit Werten von 0 bis 4 darstellen),
R₁ ein Wasserstoffatom oder eine Methylgruppe und
R₂ eine geradkettige oder verzweigte Alkylengruppe mit 1 bis 6 Kohlenstoffatomen bedeuten, als Mittel zur kovalenten Bindung von aktive Wasserstoffatome aufweisenden Verunreinigungen, Weichmachern und/oder Phlegmatisierungsmitteln in härtbaren Massen auf der Grundlage von ethylenisch ungesättigten Monomeren, Oligomeren und Polymeren als Harzkomponente und organischen Peroxiden, vorzugsweise Benzoylperoxid, als Härter.

Vorzugsweise werden als ethylenisch ungesättigte Isocyanate gemäß der vorliegenden Erfindung mindestens ein Vertreter der Diphenylmethan-4-isocyanato-4'-urethanethylenmethacrylat, Toluol-2-urethanethylenmethacrylat-6-isocyanat, Diphenylmethan-4-isocyanato-4'-urethanethylenacrylat, Toluol-2-urethanethylenacrylat-6-isocyanat, Diphenylmethan-4-isocyanato-4'-urethanpropylenacrylat, Toluol-2-urethanpropylenacrylat-6-isocyanat und Methacrylsäure-2-isocyanatoethylester umfassenden Gruppe verwendet. Erfindungsgemäß werden die ethylenisch ungesättigten Isocyanate der allgemeinen Formel (I) vorzugsweise für die Bindung von Wasser, ein- oder mehrwertigen Alkoholen, vorzugsweise Glycerol, Polyethylenglykol mit Molekulargewichten im Bereich von 62 bis 750, Polypropylenglykol mit Molekulargewichten im Bereich von 76 bis 3500 und Phthalatweichmachern in Dübel- und/oder Befestigungsmassen verwendet.

Gemäß einer weiteren bevorzugten Ausführungsform der Erfindung werden die ethylenisch ungesättigten Isocyanatderivate der allgemeinen Formel (I) in Kombination mit zusätzlichen feuchtigkeitsbindenden Mitteln in den in Rede stehenden Dübel- und/oder Befestigungsmassen eingesetzt, wobei als feuchtigkeitsbindende Mittel vorzugsweise Zeolithe, Molekularsiebe mit Porenweiten von 2 Å bis 9 Å, vorzugsweise 3 Å bis 6Å, und insbesondere 3 Å und 4 Å, welche die Absorption von Wasser, nicht jedoch der ethylenisch ungesättigten Monomere der Harzkomponente ermöglichen, Tonerde, Tonerdezemente, eisenoxidfreie oder eisenoxidarme Portlandzemente, beispielsweise "Dykerhoff Weiß", Calciumoxid, Calciumsulfat, Calciumsulfat-Hydrat, beispielsweise Calciumsulfat-Semihydrat, oder Mischungen davon eingesetzt werden können.

Einer weiteren bevorzugten Ausführungsform der Erfindung zufolge sind die erfindungsgemäß verwendeten ethylenisch ungesättigten Isocyanatderivate der allgemeinen Formel (I) zusammen mit der Harzkomponente in einer ersten Komponente eines Zweikomponenten-Befestigungsmörtels oder einer Zweikomponenten-Dübelmasse und der Härter in einer davon getrennten zweiten Komponente enthalten, wobei die beiden Komponenten in getrennten Behältern vorliegen, aus denen sie beispielsweise unter Anwendung von Druck ausgepresst und unter Einsetzen der Härtungsreaktion vermischt werden können.

Die erfindungsgemäß verwendeten ethylenisch ungesättigten Isocyanatderivate der allgemeinen Formel (I) sind entweder im Handel erhältlich oder aber mit Hilfe dem Fachmann bekannter Verfahren der organischen Synthese erhältlich, beispielsweise durch Umsetzen eines Isocyanats mit einer äquivalenten Menge eines Hydroxylgruppen-haltigen (Meth)acrylats. Beispielsweise kann man 4,4'-Diphenylmethandiisocyanat, 2,4'-Diphenylmethandiisocyanat (MDI), 1,6-Hexamethylendiisocyanat (HDI), Isophorondiisocyanat (IPDI) als Isocyanat einsetzen und als Hydroxylgruppen-haltiges (Meth)acrylat Hydroxybutylmethacrylat (HMPA) verwenden.

Erfindungsgemäß ist es möglich, die genannten Isocyanatverbindungen auch in Form der Isomerenmischungen einzusetzen, so daß man Mischungen der ethylenisch ungesättigten Isocyanatderivate der allgemeinen Formel (I) erhält, die für die erfindungsgemäße Verwendung ebenfalls geeignet sind, unabhängig davon, ob die funktionellen Gruppen in ihren Stellungen in Abhängigkeit von dem bei der Herstellung eingesetzten Ausgangsprodukt variieren.

Die Umsetzung der Isocyanatverbindungen mit den Hydroxylgruppen-haltigen (Meth)acrylaten kann durch Beschleuniger, beziehungsweise Katalysatoren, gefördert werden.

Es hat sich überraschenderweise gezeigt, daß es mit Hilfe der erfindungsgemäßen Verwendung der definierten ethylenisch ungesättigten Isocyanatderivate der allgemeinen Formel (I) gelingt, bei sonst identisch aufgebauten Zweikomponenten-Befestigungsmörteln die physikalischen Eigenschaften, namentlich die Lastwerte (Ausziehkraft) des ausgehärteten Befestigungsmörtels in signifikanter Weise zu steigern.

Die folgenden Beispiele dienen der weiteren Erläuterung der Erfindung.

### BEISPIEL 1

Herstellung eines erfindungsgemäß verwendeten Diphenylmethan-4-isocyanato-4-urethanpropylenmethacrylats

Man legt 4,4'-Diphenylmethandiisocyanat vor und gibt dann unter Rühren eine äquivalente Menge Hydroxybutylmethacrylat bei einer Temperatur von 40°C zu. Nachdem das Hydroxybutylmethacrylat vollständig zugetropft ist, entfernt man die Heizquelle und rührt so lange weiter, bis die Temperatur nach dem anfänglichen Anstieg aufgrund der Reaktionsenthalpie wieder abfällt.

In gleicher Weise erhält man ausgehend von 2,6-Toluolendiisocyanat und Hydroxybutylmethacrylat Tuluol-2-urethanpropylenmethacrylat-6-isocyanat. Die übrigen erfindungsgemäß eingesetzten ethylenisch ungesättigten Isocyanatderivate der allgemeinen Formel (I) erhält man in analoger Weise unter Anwendung entsprechender Ausgangsmaterialien.

### BEISPIELE 2 bis 4 und VERGLEICHSBEISPIEL A

Zur Verdeutlichung des durch die erfindungsgemäße Verwendung der definierten ethylenisch ungesättigten Isocyanatderivate der allgemeinen Formel (I) erzielten technischen Wirkung wurden ausgehend von den in der nachfolgenden Tabelle angegebenen Bestandteilen Zweikomponenten-Befestigungsmörtel hergestellt, die bei dem Vergleichsbeispiel A kein erfindungsgemäß verwendetes Isocyanatderivat enthielten, während die Befestigungsmörtel der Beispiele 2 bis 4 im Handel erhältlichen Methacrylsäure-2-isocyanatethylester als erfindungsgemäß verwendetes ethylenisch ungesättigtes Isocyanat der allgemeinen Formel (I) in unterschiedlichen Mengen enthalten.

Nach der Herstellung der Harzkomponente beziehungsweise der Härterkomponente durch entsprechendes Vermischen der angegebenen Bestandteile wurden die beiden Komponenten zur bestimmungsgemäßen Verwendung vermischt und wurden dann in Bohrlöcher mit einem Innendurchmesser von 14 mm und einer Tiefe von 110 mm in Beton der Qualität B 25 eingebracht. Anschließend wurde eine Gewindestange M12 in das mit dem Befestigungsmörtel gefüllte Bohrloch eingebracht, worauf die Masse während einer Stunde bei Raumtemperatur ausgehärtet wurde. Anschließend wurde mit Hilfe einer hydraulischen Ziehvorrichtung der Auszugswert in [kN] bestimmt. Dabei wurden für jede Mörtelmasse 10 Versuche durchgeführt, wobei die in der nachfolgenden Tabelle angegebenen Lastwerte jeweils den Mittelwert der 10 Versuche darstellen.

| | Vergleich A | Beispiel 2 | Beispiel 3 | Beispiel 4 |
|---|---|---|---|---|
| Bestandteile | Gew.-% | Gew.-% | Gew.-% | Gew.-% |
| **Harzkomponente:** | | | | |
| Vinylesterharz: * | 10,79 | 8,79 | 10,79 | 10,79 |
| Methacrylsäure-2-isocyanato-ethylester: | 0,00 | 9,47 | 0,41 | 3,25 |
| Butandioldimethacrylat: | 4,76 | 4,76 | 4,76 | 4,76 |
| Methacrylsäurehydroxy-propylester: | 12,18 | 4,71 | 11,77 | 8,93 |
| Diethylanillin: | 0,54 | 0,54 | 0,54 | 0,54 |
| Hydrochinon: | 0,095 | 0,095 | 0,095 | 0,095 |
| Quarzsand 0-0,9 mm | 42,795 | 42,795 | 42,795 | 42,795 |
| Pyrogene Kieselsäure | 2,19 | 2,19 | 2,19 | 2,19 |
| | | | | |
| **Härterkomponente:** | | | | |
| Benzoylperoxid | 1,75 | 1,75 | 1,75 | 1,75 |
| Glycerol | 5,59 | 5,59 | | |
| Polypropylenglykol 3500 | | | 5,59 | |
| Polyethylenglykol 400 | | | | 5,59 |
| Quarzmehl 0-0,150 mm | 19,09 | 19,09 | 19,09 | 19,09 |
| Pyrogene Kieselsäure | 0,22 | 0,22 | 0,22 | 0,22 |
| | 100 | 100 | 100 | 100 |
| | | | | |
| Lastwert [kN]* | 75,1 | 82,3 | 84,6 | 83,4 |
| | | | | |
| *Gewindestange M12, h_{eff}: 110 mm Bohrdurchmesser: 14 mm, n=10 | | | | |
| | | | | |

| | | | | |
|---|---|---|---|---|
| *Bei diesem Vinylesterharz handelt es sich um ein vierfach ethoxyliertes Bisphenol-A-dimethacrylatharz der folgenden Formel: | | | | |

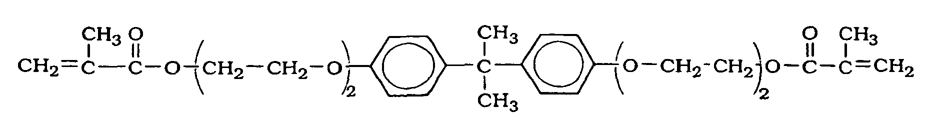

Aus der obigen Tabelle ist ohne weiteres ersichtlich, daß die unter erfindungsgemäßer Verwendung des Methacrylsäure-2-isocyanatoethylesters als Mittel zur kovalenten Bindung der in beiden Komponenten enthaltenen, aktive Wasserstoffatome aufweisenden Verunreinigungen in der Härterkomponente, namentlich Glycerol, Polypropylenglykol 3500 und Polyethylenglykol 400 beziehungsweise Feuchtigkeit, erhaltene Befestigungsmörtel sprunghaft verbesserte Lastwerte im Vergleich zu dem Mörtel des Vergleichsbeispiels A zeigen, der keine Verbindung zur kovalenten Bindung dieser Verbindungen enthielt.

## Patentansprüche

1. Verwendung von ethylenisch ungesättigten Isocyanatderivaten der algen einen Formel (I): 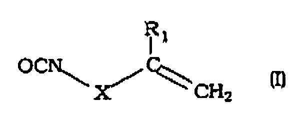 in der
X eine Gruppe der folgenden Formeln X₁ bis X₄: 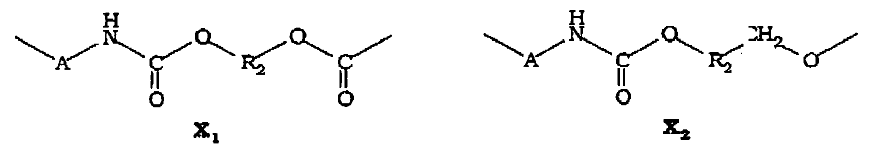 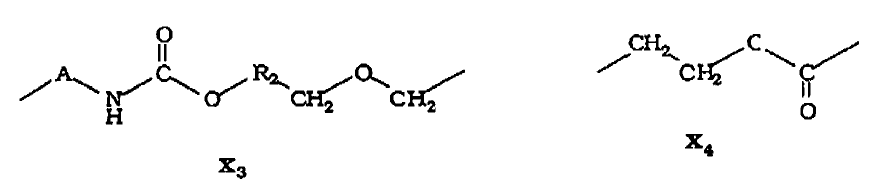 A eine geradkettige oder verzweigte Alkylengruppe mit 4 bis 6 Kohlenstoffatomen oder eine Gruppe der folgenden
Formel A₁ bis A₆: 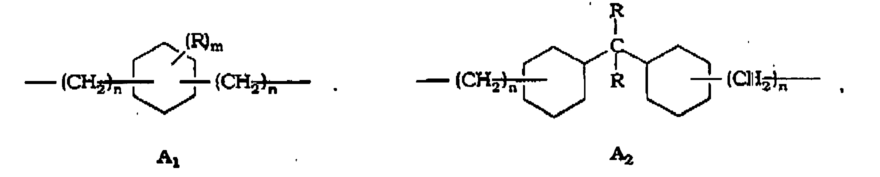 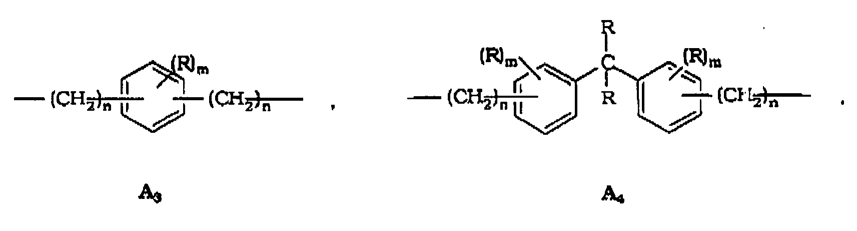 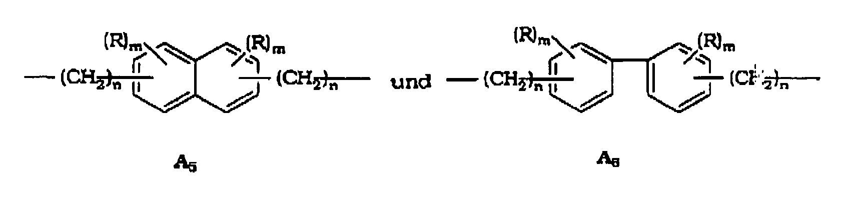 (in denen R unabhängig voneinander Wasserstoffatome oder Methylgruppen, m ganze Zahlen mit Werten von 0 oder 1 und n ganze Zahlen mit Werten von 0 bis 4 darsiellen),
R₁ ein Wasserstoffatom oder eine Methylgruppe und
R₂ eine geradkettige oder verzweigte Alkylengruppe mit 1 bis 6 Kohlenstoffatomen bedeuten, als Mittel zur kovalenten Bindung von aktive Wasserstoffatome aufweisenden Verunreinigungen, Weichmachern und/oder Phlegmatisierungsmitteln in härtbaren Massen auf der Grundlage von ethylenisch ungesättigten Monomeren, Oligomeren und Polymeren als Harzkomponente und organischen Peroxiden, vorzugsweise Benzoylperoxid, als Härter, wobei die ethylenisch ungesättigten Isocyanate (I) zusammen mit der Harzkomponente in einer ersten Komponente eines Zweikomponenten-Befestigungsmörtels und der Härter in einer davon getrennten zweiten Komponente vorliegen.

2. Verwendung nach Anspruch 1, **dadurch gekennzeichnet, daß** als ethylenisch ungesättigte Isocyanate mindestens ein Vertreter der Diphenylmethan-4-isocyanato-4'-urethancthylenmethacrylat, Toluol-2-urethanethylenmethacrylat-6-isocyanat, Diphenylmethan-4-isocyanato-4'-urethancthylenacrylat, Toluol-2-urethanethylenacrylat-6-isocyanat, Diphenylmethan-4-isocyanato-4'-urethanpropylenacrylat, Toluol-2-urethanpropylenacrylat-6-isocyanat und Methacrylsäure-2-isocyanatoethylester umfassenden Gruppe verwendet wird.

3. Verwendung nach Anspruch 1 oder 2, **dadurch gekennzeichnet, daß** die ethylenisch ungesättigten Isocyanatderivate der allgemeinen Formel (I) zur Bindung von Wasser, ein- oder mehrwertigen Alkoholen, vorzugsweise Glycerol, Polyethylenglykol mit Molekulargewichten im Bereich von 62 bis 750, Polypropylenglykol mit Molekulargewichten im Bereich von 76 bis 3500 und Phthalatweichmachem in Dubel- und/oder Befestigungsmassen eingesetzt werden.

4. Verwendung nach mindestens einem der vorhergehenden Anspruche, **dadurch gekennzeichnet, daß** die ethylenisch ungesättigten Isocyanatderivate der allgemeinen Formel (1) in Kombination mit feuchtigkeitsbindenden Mitteln in den Dubel und/oder Befestigungsmassen eingesetzt werden.

5. Verwendung nach Anspruch 4, **dadurch gekennzeichnet, daß** als feuchtigkeisbindende Mittel Zeolithe, Molekularsiebe mit Porenweiten von 2 bis 9Å, vorzugsweise 3 bis 6Å, welche die Absorption von Wasser nicht jedoch der ethylenisch ungesättigten Monomere ermöglichen, Tonerde, Tonerdezemente, eisenoxidfreier oder eisenoxidarmer Portlandzement, Calciumoxid, Calciumsulfat oder Mischungen davon verwendet werden.

## Claims

1. Use of ethylenic unsaturated isocyanate derivatives of the general formula (I): 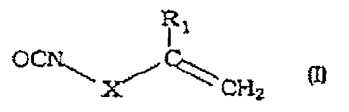 in which
X is a group of the following formulae X₁ to X₄: 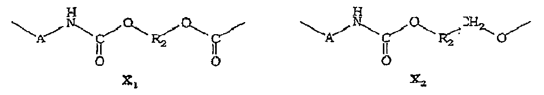 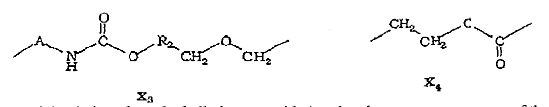 A is a straight chain or branched alkyl group with 4 to 6 carbon atoms or a group of the following formula A₁ to A₆: 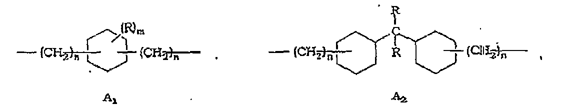 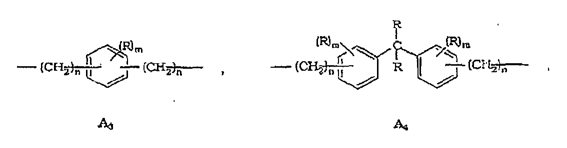 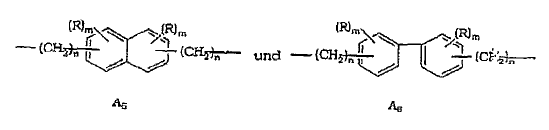 (in which R represents hydrogen atoms or methyl groups, which are independent of each other, m represents whole numbers with values from 0 to 1 and n represents whole numbers with values from 0 to 4),
R₁ is a hydrogen atom or a methyl group and
R₂ is a straight chain or branched alkyl group with 1 to 6 carbon atoms,
as a means of covalent bonding of contaminants, softeners and/or phlegmatising agents with active hydrogen atoms in curable compounds, based on ethylenic unsaturated monomers, oligomers and polymers as resin components and organic peroxides, preferably benzoyl peroxide, as curing agent, in which ethylenic unsaturated isocyanate (I) together with the resin components is present in a first component of a two component fixing mortar and the curing agent is present in a second component, which is separate from it.

2. Use according to claim 1, **characterised in that** as ethylenic unsaturated isocyanate at least one representative of groups containing diphenylmethane-4-isocyanate-4'-urethane ethylene methacrylate, toluol-2-urethane ethylene methacrylate-6-isocyanate, diphenylmethane-4-isocyanate-4'-urethane ethylene acrylate, toluol-2-urethane ethylene acrylate-6-isocyanate, diphenylmethane-4-isocyanate-4'-urethane propylene acrylate, toluol-2-urethane propylene acrylate-6-isocyanate and methacrylic acid-2-isocyanatoethyl ester is used.

3. Use according to claim 1 or 2, **characterised in that** ethylenic unsaturated isocyanate derivatives of the general formula (I) are used to bond water, monovalent or polyvalent alcohols, preferably glycerol, polyethylene glycol with molecular weights in the range from 62 to 750, polypropylene glycol with molecular weights in the range from 76 to 3500 and phthalate softeners in peg and/or fixing compounds.

4. Use according to at least one of the previous claims, **characterised in that** ethylenic unsaturated isocyanate derivatives of the general formula (I) are used in combination with moisture bonding means in plugging and/or fixing compounds.

5. Use according to claim 4, **characterised in that** as moisture bonding means zeolite, molecular sieves with pore widths from 2 to 9 Å, preferably 3 to 6 Å, which make the absorption of water, but not ethylenic unsaturated monomers possible, aluminium oxide, aluminium oxide cement, Portland cement, which is low in or free from iron oxide, calcium oxide, calcium sulphate or mixtures of them are used.

## Revendications

1. Utilisation de dérivés d'isocyanate insaturés éthyléniques de formule générale 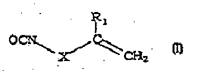 dans laquelle
X représente un groupe des formules X₁ à X₄ suivantes : 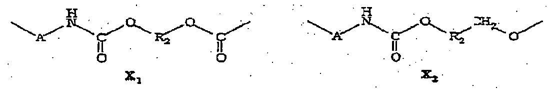 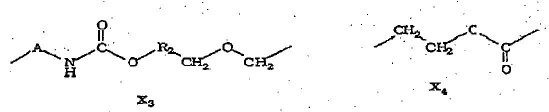 A représente un groupe alkylène linéaire ou ramifié avec 4 à 6 atomes de carbone ou un groupe des formules suivantes A₁ à A₆ : 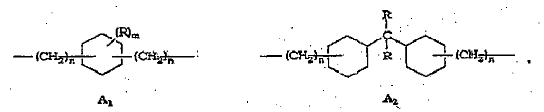 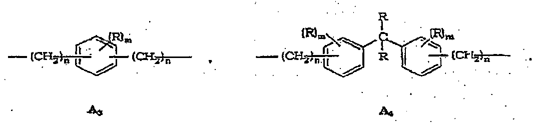 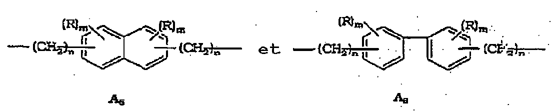 (dans lesquelles les R, indépendamment les uns des autres, représentent des atomes d'hydrogène ou des groupes méthyles, m des nombres entiers avec les valeurs 0 et 1 et n des nombres entiers avec des valeurs de 0 à 4),
R₁ représente un atome d'hydrogène ou un groupe méthyle et
R₂ représente un groupe alkylène, linéaire ou ramifié avec 1 à 6 atomes de carbone,
comme moyens pour une attache covalente d'impuretés, de plastifiants et/ou d'agents de stabilisation comprenant des atomes d'hydrogène actifs dans des masses durcissables sur la base de monomères, d'oligomères et de polymères insaturés éthyléniques comme composant résine et de peroxydes organiques, de préférence du peroxyde de benzoyle, comme durcissant, les isocyanates (I) insaturés éthyléniques se trouvant ensemble avec le composant résine dans un premier composant d'un mortier de fixation à deux composants et le durcisseur se trouvant dans un deuxième composant séparé de ce dernier.

2. Utilisation selon la revendication 1, **caractérisée en ce que** comme isocyanate insaturé éthylénique est utilisé au moins un représentant du groupe comprenant le diphénylméthane-4-isocyanato-4'-uréthanétylènométhacrylate, le toluène-2-uréthanéthylènométhacrylate-6-isocyanate, le diphénylméthane-4-isocyanato-4'-uréthanéthylènacrylate, le toluène-2-uréthanéthylènacrylate-6-isocyanate, le diphénylméthane-4-isocyanato-4'-uréthanopropylènacrylate, le toluène-2-uréthanopropylènacrylate-6-isocyanate et l'ester méthacrylique de 2-isocyanatoéthyle.

3. Utilisation selon la revendication 1 ou 2, **caractérisée en ce que** les dérivés d'isocyanate insaturés éthyléniques de formule générale (I) sont utilisés pour fixer de l'eau, des alcools mono- ou polyhydriques, de préférence du glycérol, du polyéthylène glycol avec des poids moléculaires dans l'intervalle de 62 à 750, du polypropylène glycol avec des poids moléculaires dans l'intervalle de 76 à 3500 et des plastifiants au phtalate, dans des masses pour chevilles et des masses de fixation.

4. Utilisation selon l'une au moins des revendications précédentes, **caractérisée en ce que** les dérivés d'isocyanate insaturés éthyléniques de formule générale (I) sont utilisés dans des masses pour chevilles et des masses de fixation en combinaison avec des agents fixant l'humidité.

5. Utilisation selon la revendication 4, **caractérisée en ce que**, comme agents fixant l'humidité, sont utilisés des zéolithes, des tamis moléculaires avec des diamètres de pores de 2 à 9 Å, de préférence de 3 à 6 Å, qui permettent l'absorption de l'eau, mais non des monomères insaturés éthyléniques, de l'argile, des ciments argileux, du ciment Portland exempt d'oxyde de fer ou pauvre en oxyde de fer, de l'oxyde de calcium, du sulfate de calcium, ou des mélanges de ceux-ci.
